# EUROPÄISCHE PATENTANMELDUNG

(11) **EP 4 306 604 A1**
(43) Veröffentlichungstag der Anmeldung: **17.01.2024**
(21) Anmeldenummer: 23184466.3
(22) Anmeldetag: 10.07.2023
(51) Int. Cl.: C09J 5/00, C09J 7/20, H01M 50/30, H01M 50/342

(54) **VERFAHREN ZUM DAUERHAFTEN VERSCHLIESSEN VON LÖCHERN MIT ÜBERDRUCKSICHERUNG UND KLEBEELEMENT FÜR DAS VERFAHREN**

(30) Priorität: 11.07.2022 DE 102022117176
(71) Anmelder: tesa SE, 22848 Norderstedt (DE)
(72) Erfinder: SOMMER, Magdalena, 22848 Norderstedt (DE); MEYER, Katja, 22848 Norderstedt (DE); NIEMEYER, Thomas, 22848 Norderstedt (DE); KLOBEDANZ, Kenny, 22848 Norderstedt (DE); KIPKE, Jennifer, 22848 Norderstedt (DE)
(74) Vertreter: tesa SE

(57) **Zusammenfassung**

Die Erfindung betrifft ein Verfahren zum Verschließen einer durchgehenden Ausnehmung (10) in einem Substrat (12), umfassend die Verfahrensschritte: a) Herstellen oder Bereitstellen eines Klebeelements (14), umfassend: i) eine Klebeschicht (16) umfassend eine Klebemasse, ii) eine auf der Klebeschicht (16) angeordnete Trägerschicht (18), umfassend eine erste Trägerlage (19), und b) Aufkleben des Klebeelements (14) mittels der Klebeschicht (16) auf das Substrat (12), so dass das Klebeelement (14) die durchgehende Ausnehmung (10) vollständig bedeckt und die durchgehende Ausnehmung (10) durch das Klebeelement (14) fluiddicht verschlossen wird, wobei das Klebeelement (14) einen Drucköffnungsbereich umfasst, der zumindest abschnittsweise von einem in der Trägerschicht (18) ausgebildeten Schwächungsbereich (22) umgeben ist, wobei die mittlere Dicke der Trägerschicht (18) im Schwächungsbereich (22) kleiner ist als die mittlere Dicke der Trägerschicht (18) im Drucköffnungsbereich, wobei das Klebeelement (14) dazu eingerichtet ist, dass das Einwirken eines vorbestimmten Öffnungsdrucks auf den Drucköffnungsbereich das Klebeelement (14) im Schwächungsbereich (22) zumindest teilweise irreversibel zerstört und im Klebeelement (14) ein Durchgangsloch (24) ausbilden, und wobei das Aufkleben des Klebeelements (14) so erfolgt, dass der Drucköffnungsbereich die durchgehende Ausnehmung (10) im Substrat (12) zumindest teilweise bedeckt.

## Beschreibung

Die Erfindung betrifft ein Verfahren zum Verschließen einer durchgehenden Ausnehmung in einem Substrat, ein entsprechendes überdruckgesichertes Substrat, ein Klebelement zum dauerhaften Verschließen von Löchern mit Überdrucksicherung, und eine Verwendung entsprechender Klebeelemente zum dauerhaften Verschließen eines Loches in einem Substrat und zum Erzeugen einer Überdrucksicherung.

Bei der Herstellung komplexer Produkte ist es fertigungsbedingt in vielen Fällen nötig, in den verarbeiteten Bauteilen und Substraten Löcher vorzusehen, durch die hindurch im Zuge der Herstellung weitere Arbeitsschritte durchgeführt werden können, beispielsweise indem sie den Zugang zu einem Innenraum ermöglichen, in dem weitere Bestandteile angeordnet werden sollen. Am Ende des Herstellungsprozesses sind diese Löcher jedoch in vielen Fällen nicht mehr erforderlich und für zahlreiche Endanwendungen sogar nachteilig, beispielsweise weil sie den Eintritt von Feuchtigkeit oder Verunreinigungen ermöglichen. Zu diesem Zweck ist es im Stand der Technik bekannt, entsprechende durchgehende Ausnehmungen in Substraten im Zuge der Fertigung dauerhaft zu verschließen, wobei insbesondere der Einsatz von Klebeelementen, beispielsweise sogenannten Stanzlingen, eine effiziente Möglichkeit zum dauerhaften Verschluss von Löchern darstellt, wie es beispielsweise in der EP 3569406 A1, der EP 3943283 A1 oder der EP 3992259 A1 offenbart ist.

In vielen Fällen dienen durchgehende Ausnehmungen im Substrat jedoch nicht lediglich fertigungstechnischen Zwecken. Vielmehr kann es notwendig sein, dass der Druck im Innenraum von Substraten, beispielsweise Batteriegehäusen, beeinflussbar sein soll, wobei für das hierfür notwendige Druckmanagement im Bereich der durchgehenden Ausnehmungen geeignete Druckregulierungsvorrichtungen vorgesehen werden müssen, beispielsweise in der Form von Ventilen.

Eine besondere Bedeutung im Bereich des Druckmanagements im Inneren von Substraten haben sogenannten Überdrucksicherungen, die teilweise auch als "Berstsysteme" bezeichnet werden. Solche zumeist konstruktiv komplexeren Überdrucksicherungen dienen beispielsweise bei elektronischen Geräten dem Schutz der verbauten Komponenten und ermöglichen es, bei Erreichen eines bestimmten Innendruckes einen Druckausgleich mit der Umgebung zu erlauben, indem der Überdruck im Zuge einer Entlüftung abgelassen werden kann.

Entsprechende Überdrucksicherungen sind dabei insbesondere auch für Batteriegehäuse relevant, wie sie heutzutage beispielsweise im Bereich der Elektromobilität zum Einsatz kommen. Diese Batteriegehäuse umfassen in ihrem Inneren die Bestandteile der elektrochemischen Zellen, die der elektrochemischen Speicherung und Gewinnung von Energie dienen und beispielsweise in der Form von sogenannten Pouch-Zellen vorliegen. Entsprechende elektrochemische Zellen, beispielsweise Lithium-Ionen-Batterien, stellen dabei komplexe und in einigen Fällen auch störungsanfällige Systeme dar, insbesondere da sie in vielen Fällen brennbare Substanzen umfassen, insbesondere Elektrolyte, und im Betrieb hohe Temperaturen auftreten können.

Infolgedessen kann es bei Batterien im schlechtesten Fall zu einem sogenannten thermischen Durchgehen kommen. Im Zuge eines solchen thermischen Durchgehens kommt es durch die freigesetzten Gase bzw. die Verdampfung von flüssigen Komponenten in vielen Fällen zu einem starken Druckaufbau im Inneren des Batteriegehäuses, welcher zu einer unkontrollierten Zerstörung des Batteriegehäuses führen kann, wodurch wiederum umliegende Batteriegehäuse beschädigt werden können, so dass im schlimmsten Fall eine ungewünschte Kettenreaktion resultieren kann.

Aus diesem Grund sind leistungsfähige Überdrucksicherungen für Batteriegehäuse besonders sicherheitsrelevant. Die zunehmende Relevanz der Elektromobilität im Bereich der Fahrzeugindustrie und der zunehmende Einsatz von elektrochemischen Energiespeichern führt entsprechend dazu, dass heutzutage ein stetes Interesse an der Verbesserung von Überdrucksicherungen besteht, die insbesondere für den Einsatz mit Batteriegehäusen geeignet sind.

Eine aus dem Stand der Technik bekannte Überdrucksicherung ist beispielsweise in der CN 107178638 A offenbart. Die aus dem Stand der Technik bekannten Überdrucksicherungen sind in vielen Fällen technisch komplexe Bauteile, die regelmäßig mit hohem Fertigungsaufwand in die durchgehenden Ausnehmungen der Substrate eingepasst werden müssen und dabei ein vergleichsweise hohes Eigengewicht und ein gewisses Eigenvolumen aufweisen. Zudem müssen entsprechende Berstsysteme des Standes der Technik häufig spezifisch auf bestimmte Lochgeometrien ausgelegt werden und sind in vielen Fällen nicht flexibel auf unterschiedliche Abmessungen der zu verschließenden Löcher anpassbar.

Die primäre Aufgabe der vorliegenden Erfindung war es, die Nachteile des Standes der Technik zu beseitigen oder zumindest zu verringern.

Insbesondere war es die Aufgabe der vorliegenden Erfindung, ein Verfahren zum Verschließen einer durchgehenden Ausnehmung in einem Substrat anzugeben, mit dem ein zuverlässiger und fluiddichter Verschluss der durchgehenden Ausnehmungen ermöglicht wird, der jedoch infolge eines Überdruckes einen zuverlässigen Druckabbau durch Entlüftung ermöglicht.

Es war eine Aufgabe der vorliegenden Erfindung, dass das anzugebende Verfahren unter Verwendung solcher Komponenten durchführbar sein sollte, die einen möglichst geringen Bauraum bedürfen und ein geringes Eigengewicht aufweisen.

Zudem war es eine Aufgabe der vorliegenden Erfindung, dass das Verschließen der durchgehenden Ausnehmungen in dem anzugebenden Verfahren besonders einfach möglich sein sollte, wobei wünschenswerterweise eine leichte Automatisierbarkeit gewährleistet sein sollte.

Es war eine weitere Aufgabe der vorliegenden Erfindung, dass das anzugebende Verfahren besonders zeit- und kosteneffizient durchführbar sein sollte, insbesondere mit hohen Durchsatzraten, wobei wünschenswerterweise auch die mit der Lagerung der im Verfahren einzusetzenden Komponenten verknüpften Lagerkosten möglichst niedrig sein sollten.

Es war eine ergänzende Aufgabe der vorliegenden Erfindung, dass das anzugebende Verfahren durch die einzusetzenden Komponenten besonders flexibel zum Verschluss von durchgehenden Ausnehmungen mit unterschiedlichen Lochgeometrien geeignet sein sollte und idealerweise für verschiedene Lochgeometrien keine spezifische Anpassung der eingesetzten Komponenten erforderlich machen sollte.

Es war eine weitere Aufgabe der vorliegenden Erfindung, dass mit dem anzugebenden Verfahren bis zum Einsetzen der Überdrucksicherung ein besonders zuverlässiger und langlebiger Lochverschluss möglich sein sollte. Insoweit war es eine ergänzende Aufgabe der vorliegenden Erfindung, dass die mit dem anzugebenden Verfahren erzeugte Überdrucksicherung eine ausgeprägte Richtungsabhängigkeit der Überdrucksicherung ermöglichen sollte, sodass ein von außen auf den Verschluss wirkender Überdruck auch bei hohen Überdrücken nicht zu einem Druckausgleich führen sollte.

Im Lichte der vorstehenden Ausführungen war es eine Aufgabe der vorliegenden Erfindung, ein mit dem anzugebenden Verfahren hergestelltes überdruckgesichertes Substrat anzugeben.

Zudem war es eine Aufgabe der vorliegenden Erfindung, eine Komponente zum dauerhaften Verschließen von Löchern mit Überdrucksicherung anzugeben, welche in dem anzugebenden Verfahren eingesetzt werden kann und zudem eine darauf aufbauende Verwendung anzugeben.

Die Erfinderinnen der vorliegenden Erfindung haben nunmehr gefunden, dass sich die vorstehend beschriebenen Aufgaben überraschenderweise lösen lassen, wenn anstelle von komplexen, konstruktiven Berstsystemen zum Verschluss von durchgehenden Ausnehmungen in Substraten spezifische Klebeelemente eingesetzt werden, mit denen die durchgehende Ausnehmung fluiddicht überklebt werden kann, die jedoch infolge einer Schwächung in der Trägerschicht einen Drucköffnungsbereich umfassen, welcher infolge eines vorbestimmten Öffnungsdruckes weitgehend irreversibel aufbricht, sodass durch das entstehende Durchgangsloch im Klebeelement ein Druckausgleich erfolgen kann, wie es in den Ansprüchen definiert ist.

Überraschenderweise ermöglicht diese Ausgestaltung von Klebeelementen und deren Einsatz in entsprechenden Verfahren nicht nur einen zuverlässigen und fluiddichten Verschluss von durchgehenden Ausnehmungen in Substraten, sondern erlaubt auch eine zuverlässige und über das Ausmaß der Schwächung der Trägerschicht präzise einstellbares Öffnungsverhalten infolge eines Überdrucks. Die Erfinderinnen haben dabei gefunden, dass die vergleichsweise einfache Ausgestaltung des Klebeelementes sowie dessen einfache Applikation, in einem besonders vorteilhaften Verfahren resultieren.

Die entsprechenden Klebeelemente sind hinsichtlich ihrer Applikation nicht nur besonders leicht zu automatisieren und kostengünstig zu fertigen, sondern verfügen auch über ein besonders niedriges Eigengewicht und Eigenvolumen. Vorteilhafterweise haben die entsprechenden Klebeelemente und damit das entsprechende Verfahren eine hohe Toleranz für Abweichungen in der Lochgeometrie, sodass Fertigungstoleranzen geringer ausfallen können und die eingesetzten Klebeelemente zum Verschluss von durchgehenden Ausnehmungen mit unterschiedlichen Abmessungen eingesetzt werden können.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Klebeelemente, überdruckgesicherter Substrate und Verwendungen ergeben sich aus den Merkmalen bevorzugter Verfahren.

Die Erfindung betrifft ein Verfahren zum Verschließen einer durchgehenden Ausnehmung in einem Substrat, umfassend die Verfahrensschritte:
a) Herstellen oder Bereitstellen eines Klebeelements, umfassend:
   i) eine Klebeschicht umfassend eine Klebemasse,
   ii) eine auf der Klebeschicht angeordnete Trägerschicht, umfassend eine erste Trägerlage, und
b) Aufkleben des Klebeelements mittels der Klebeschicht auf das Substrat, so dass das Klebeelement die durchgehende Ausnehmung vollständig bedeckt und die durchgehende Ausnehmung durch das Klebeelement fluiddicht verschlossen wird,
wobei das Klebeelement einen Drucköffnungsbereich umfasst, der zumindest abschnittsweise von einem in der Trägerschicht ausgebildeten Schwächungsbereich umgeben ist, wobei die mittlere Dicke der Trägerschicht im Schwächungsbereich kleiner ist als die mittlere Dicke der Trägerschicht im Drucköffnungsbereich, wobei das Klebeelement dazu eingerichtet ist, dass das Einwirken eines vorbestimmten Öffnungsdrucks auf den Drucköffnungsbereich das Klebeelement im Schwächungsbereich zumindest teilweise irreversibel zerstört und im Klebeelement ein Durchgangsloch ausbilden, und wobei das Aufkleben des Klebeelements so erfolgt, dass der Drucköffnungsbereich die durchgehende Ausnehmung im Substrat zumindest teilweise bedeckt.

Das erfindungsgemäße Verfahren dient dem Verschließen, insbesondere dem fluiddichten Verschließen von durchgehenden Ausnehmungen in Substraten, insbesondere von Löchern und hat in der Praxis eine besondere Relevanz für den Verschluss von solchen Löchern, durch die ein Innenraum in dem Substrat mit der Umgebung fluidverbunden ist. Bevorzugt ist entsprechend ein erfindungsgemäßes Verfahren, wobei das Substrat einen Innenraum umfasst, welcher durch das Aufkleben des Klebeelementes auf die durchgehende Ausnehmung fluiddicht verschlossen wird.

Vorteilhafterweise ist das erfindungsgemäße Verfahren bezüglich der Art des Substrates im Wesentlichen nicht limitiert. Nach Einschätzung der Erfinderinnen eignet sich das erfindungsgemäße Verfahren jedoch besonders für den Einsatz beim Verschluss von Batteriegehäusen, da diese in vielen Fällen wegen der hohen Zahl von Einzelelementen besonders stark von dem niedrigen Gewicht und den geringen Fertigungskosten der im Rahmen der vorliegenden Erfindung gefundenen Lösung profitieren. Bevorzugt ist folglich insbesondere ein erfindungsgemäßes Verfahren, wobei das Substrat ein Gehäuse ist, bevorzugt ein Gehäuse eines elektronischen Geräts oder einer Batterie, besonders bevorzugt einer Batterie. Bevorzugt ist zusätzlich oder alternativ auch ein erfindungsgemäßes Verfahren, wobei das Substrat ein oder mehrere Materialien umfasst, die ausgewählt sind aus der Gruppe bestehend aus Metallen, Kompositmaterialien, beispielsweise umfassend Glas oder Kohlefasern, und Kunststoffen, bevorzugt Kunststoffen und Metallen, besonders bevorzugt Metallen, insbesondere beschichteten Metallen.

Der Fachmann versteht, dass ein entsprechendes Substrat auch mehr als eine durchgehende Ausnehmung umfassen kann, dass es in diesem Fall jedoch bevorzugt ist, wenn sämtliche der Ausnehmungen mit dem erfindungsgemäßen Verfahren verschlossen werden. Alternativ könnten die im Substrat vorhandenen durchgehenden Ausnehmungen jedoch auch teilweise mit dem erfindungsgemäßen Verfahren und teilweise auf anderen Wegen, beispielsweise mit herkömmlichen Klebeelementen ohne Überdrucksicherung, verschlossen werden. Bevorzugt ist demgemäß ein erfindungsgemäßes Verfahren, wobei das Substrat zwei oder mehr durchgehende Ausnehmungen umfasst, wobei bevorzugt sämtliche durchgehenden Ausnehmungen mit dem Verfahren verschlossen werden.

Das im erfindungsgemäßen Verfahren einzusetzende Klebeelement ist in Übereinstimmung mit dem fachmännischen Verständnis ein flächiges Klebeelement, d. h. es weist in den zwei Raumrichtungen einer Ebene eine deutlich größere Ausdehnung auf als in der orthogonal zur Ebene stehenden Richtung. Entsprechende Klebeelemente können dabei beispielsweise unter Einsatz von solchen Verfahren hergestellt werden, die dem Fachmann im Bereich der Technik gut vertraut sind und beispielsweise auch bei der Herstellung von anderen Klebeelementen zum Einsatz kommen. Typischerweise werden entsprechende flächige Klebeelemente mit einem geeigneten Schneidverfahren aus einem größeren Klebeverbund vereinzelt, welcher zuvor hergestellt wurde, sodass die Klebeelemente in großen Stückzahlen verfügbar sind. Das Vereinzeln kann beispielsweise durch Ausstanzen der Klebeelemente erfolgen, in welchen Fällen zumeist von einem Stanzling gesprochen wird. Bevorzugt ist somit ein erfindungsgemäßes Verfahren, wobei das Klebeelement hergestellt wird durch Ausstanzen des Klebeelements aus einem Klebeverbund, umfassend eine Klebelage und eine auf der Klebelage angeordnete Trägerlage, wobei der Schwächungsbereich bevorzugt vor dem Ausstanzen erzeugt wird. Besonders bevorzugt ist insoweit ein erfindungsgemäßes Verfahren, wobei das Klebeelement ein Stanzling ist.

Alternativ zu der Herstellung der Klebeelemente im Verfahren, beispielsweise durch Stanzen, können diese im erfindungsgemäßen Verfahren jedoch auch lediglich bereitgestellt werden, beispielsweise durch Zukaufen von einem Zulieferer.

Die eingesetzten Klebeelemente umfassen eine Klebeschicht und eine Trägerschicht, welche miteinander verbunden sind, wie es dem Fachmann im Bereich der Klebtechnik aus vielen Klebebändern und vergleichbaren Klebeprodukten bekannt ist. Die Klebeschicht dient dem Aufkleben des Klebeelementes auf das Substrat und gewährleistet die nötige Adhäsion des Klebeelements am Substrat um ein ungewolltes, verfrühtes Ablösen bei relativ niedrigen Druckdifferenzen zwischen den beiden Seiten des Substrats bzw. bei sonstigen mechanischen Belastung zu vermeiden.

Mit Blick auf eine möglichst effiziente Verfahrensführung, welche insbesondere eine besonders leichte Applikation der Klebeelemente ermöglicht, jedoch gegebenenfalls auch eine einfache Korrektur einer nicht perfekten Aufbringung erlaubt, schlagen die Erfinderinnen vor, die Klebemasse als Haftklebemasse auszuführen. Bevorzugt ist entsprechend ein erfindungsgemäßes Verfahren, wobei die Klebemasse eine Haftklebemasse ist.

Eine Haftklebemasse ist in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G`) und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10⁰ bis 10¹ rad/sec G` und G" jeweils zumindest zum Teil im Bereich von 10³ bis 10⁷ Pa liegen.

Als mögliche alternative Ausgestaltung zu der vorstehend beschriebenen bevorzugten Ausgestaltung als Haftklebemasse ist es denkbar, die Klebemasse als reaktive Klebemasse auszuführen, d. h. als Klebemasse, die erst infolge eines Aushärtungsschrittes aushärtet, wobei die resultierende Aushärtung der Klebemasse und deren Wirkung als Strukturklebstoff diese Ausgestaltung besonders für Anwendungen interessant macht, bei denen vergleichsweise hohe vorbestimmte Öffnungsdrücke eingestellt werden sollen. Für bestimmte Anwendungen bevorzugt ist somit ein erfindungsgemäßes Verfahren, wobei die Klebemasse eine aushärtbare Klebemasse, bevorzugt eine strahlungshärtende und/oder thermisch härtende Klebemasse, ist, wobei das Verfahren vorzugsweise zusätzlich nach Verfahrensschritt b) den folgenden Verfahrensschritt umfasst:
c) Zumindest teilweises Aushärten der aushärtbaren Klebemasse.

Nach Einschätzung der Erfinderinnen kann es als großer Vorteil des erfindungsgemäßen Verfahrens gesehen werden, dass dieses hinsichtlich der chemischen Natur der im Klebeelement eingesetzten Klebemasse sehr flexibel ist. Die grundsätzliche Funktionalität des erfindungsgemäßen Verfahrens entsteht nach Einschätzung der Erfinderinnen vor allem aus der Wechselwirkung einer spezifisch geschwächten Trägerschicht mit einer generischen Klebemasse, und ist entsprechend nicht auf chemisch-spezifische Klebemassen beschränkt. Dies ermöglicht in vorteilhafter Weise die Auswahl geeigneter Klebemassen im Lichte der sonstigen Anwendungserfordernisse, insbesondere hinsichtlich der Adhäsion am jeweiligen Substrat und/oder der Temperaturbeständigkeit für die angestrebten Anwendungsbereiche, vorzunehmen. Den Erfinderinnen ist es insoweit jedoch gelungen, Klebemassen zu identifizieren, mit denen sich nach ihrer Einschätzung besonders leistungsfähige Klebeelemente erhalten lassen. Bevorzugt ist nämlich ein erfindungsgemäßes Verfahren, wobei die Klebemasse ein oder mehrere Polymere umfasst, die ausgewählt sind aus der Gruppe bestehend aus Polyurethanen, Poly(meth)acrylaten und Synthesekautschuken, bevorzugt Poly(meth)acrylaten und Synthesekautschuken, besonders bevorzugt Poly(meth)acrylaten.

Im Rahmen der vorliegenden Erfindung umfasst der Ausdruck "Poly(meth)acrylate" in Übereinstimmung mit dem fachmännischen Verständnis Polyacrylate und Polymethacrylate sowie Copolymere dieser Polymere. Poly(meth)acrylate können kleinere Mengen an Monomereinheiten enthalten, die sich nicht aus (Meth)acrylaten ableiten. Unter einem "Poly(meth)acrylat" wird im Rahmen der vorliegenden Erfindung entsprechend ein (Co-)Polymer verstanden, dessen Monomerbasis zu einem Massenanteil von 70 % oder mehr, bevorzugt 90 % oder mehr, besonders bevorzugt 98 % oder mehr, aus Monomeren besteht, die ausgewählt sind aus der Gruppe bestehend aus Acrylsäure, Methacrylsäure, Acrylsäureestern und Methacrylsäureestern, bezogen auf die Masse der Monomerbasis. Bevorzugt liegt der Massenanteil von Acrylsäureester und/oder Methacrylsäureester bei 50 % oder mehr, besonders bevorzugt 70 % oder mehr. Poly(meth)acrylate sind allgemein durch radikalische Polymerisation von Acryl- und/oder Methacryl-basierten Monomeren sowie gegebenenfalls weiteren copolymerisierbaren Monomeren zugänglich.

Nach Einschätzung der Erfinderinnen ist es für bestimmte Anwendungszwecke vorteilhaft, die Klebemasse als geschäumte Klebemasse auszuführen, beispielsweise als syntaktisch geschäumte Klebemasse, welche auf expandierte Mikroballons zurückgreift, wie sie aus dem Stand der Technik grundsätzlich bekannt sind oder als physikalisch geschäumte Klebemasse, welche beispielsweise unter Einsatz eines Treibgases erzeugt werden kann. Solche geschäumten Klebemassen weisen häufig insbesondere hinsichtlich der Schockbeständigkeit Vorteile auf. Insoweit kann es als Vorteil des erfindungsgemäßen Verfahrens gesehen werden, dass eine Schäumung der Klebemasse nach Einschätzung der Erfinderinnen der grundsätzlichen Funktionalität der erfindungsgemäßen Klebeelemente nicht im Wege steht. Für bestimmte Anwendungen bevorzugt ist demgemäß ein erfindungsgemäßes Verfahren, wobei die Klebemasse eine geschäumte Klebemasse ist, wobei die Klebemasse bevorzugt eine physikalisch geschäumte Klebemasse ist und/oder ein oder mehrere Komponenten umfasst, die ausgewählt sind aus der Gruppe bestehend aus Hohlkugeln und zumindest teilweise expandierten Mikroballons.

Mit Blick auf eine möglichst Material sparenden Herstellung und gute Handhabungseigenschaften schlagen die Erfinderinnen vor, dass die Dimensionen der Klebeschicht und der Trägerschicht möglichst ähnlich sein sollten. Auch wenn es für manche Anwendungen bevorzugt sein mag, die Trägerschicht über die Klebeschicht hinausragen zu lassen, ist es insbesondere mit Blick auf die Fertigungseffizienz bevorzugt, wenn diese vollständig von der Klebeschicht bedeckt ist. Bevorzugt ist somit ein erfindungsgemäßes Verfahren, wobei die Trägerschicht auf einer Seite zu 50 % oder mehr, bevorzugt zu 70 % oder mehr, besonders bevorzugt zu 90 % oder mehr, ganz besonders bevorzugt zu 95 % oder mehr, insbesondere bevorzugt im Wesentlichen vollständig von der Klebeschicht bedeckt ist.

Erfindungsgemäß umfasst die Trägerschicht eine erste Trägerlage, wobei die Trägerschicht in der Praxis in vielen Fällen im Wesentlichen aus dieser Trägerschicht bestehen wird. Für die meisten Ausführungsformen relevant ist zudem ein erfindungsgemäßes Verfahren, wobei die Klebeschicht auf der ersten Trägerlage angeordnet ist.

Hierbei kann es als Vorteil gesehen werden, dass das erfindungsgemäße Verfahren hinsichtlich der Materialauswahl der ersten Trägerlage grundsätzlich sehr flexibel ist und der Fachmann auf typische Materialien zurückgreifen kann, welche im Bereich der Klebetechnik bereits als Trägermaterialien bekannt sind. Insoweit ist es den Erfinderinnen jedoch gelungen, geeignete Materialien zu identifizieren, mit denen sich in jedem Fall sehr zuverlässige und leistungsstarke Klebeelemente für den Einsatz im erfindungsgemäßen Verfahren erhalten lassen. Bevorzugt ist nämlich ein erfindungsgemäßes Verfahren, wobei die erste Trägerlage eine Folie umfasst, die ausgewählt ist aus der Gruppe bestehend aus Kunststofffolien, beispielsweise Polyesterfolien, PEEK-Folien, PAEK-Folien, Polyimidfolien oder Polyamidfolie, insbesondere Polyesterfolien, und Metallfolien, bevorzugt Metallfolien. Bevorzugt ist zusätzlich oder alternativ ein erfindungsgemäßes Verfahren.

Insbesondere für anspruchsvollere Anwendungen, beispielsweise bei einer starken erwarteten thermischen und/oder chemischen und/oder mechanischen Belastung des Klebeverschlusses im Einsatz, ist es möglich, dass die Trägerschicht neben der ersten Trägerlage auch weitere Trägerlagen umfasst, die beispielsweise der Optimierung der physikalisch-chemischen Eigenschaften, insbesondere der Oberflächeneigenschaften dienen. Bevorzugt ist ein erfindungsgemäßes Verfahren, wobei die Trägerschicht eine oder mehrere, bevorzugt zwei oder mehr, besonders bevorzugt drei oder mehr, weitere Trägerlagen umfasst, wobei die Trägerlagen der Trägerschicht bevorzugt durch Zwischenklebeschichten miteinander verbunden sind.

Nach Einschätzung der Erfinderinnen ist insbesondere eine Ausgestaltung bevorzugt, bei welcher die Trägerschicht als zusätzliche Lage eine Schutzfolie umfasst, welche die unterliegenden Trägerlagen, insbesondere die erste Trägerlage vor Umwelteinflüssen abschirmt und insbesondere dann vorteilhaft ist, wenn die erste Trägerlage aus Metall ausgebildet wird, da hierdurch auch langfristig eine ungewollte Korrosion und eine daraus gegebenenfalls resultierende Beschädigung der ersten Trägerlage verhindert werden kann. Bevorzugt ist ein erfindungsgemäßes Verfahren, wobei die Trägerschicht als weitere Trägerlage auf der von der Klebeschicht abgewandten Seite der ersten Trägerlage eine Schutzfolie umfasst, wobei die Schutzfolie bevorzugt ausgewählt ist aus der Gruppe bestehend aus Kunststofffolien, wobei die Schutzfolie besonders bevorzugt die Oberfläche der Trägerschicht im Wesentlichen vollständig bedeckt.

Erfindungsgemäß wird mit den entsprechenden Klebeelementen die durchgehende Ausnehmung vollständig bedeckt und dadurch fluiddicht verschlossen. Der Fachmann versteht insoweit, dass diese nachfolgend weiter erläuterte Art der Überdrucksicherung dazu führt, dass dieser fluiddichte Verschluss in Folge eines wirkenden Druckes aufgebrochen werden kann. Hierfür wird im Klebeelement erfindungsgemäß ein Schwächungsbereich vorgesehen, indem die mittlere Dicke der Trägerschicht gegenüber dem restlichen Klebeelement verringert ist, sodass die Trägerschicht im Schwächungsbereich eine verringerte mechanische Belastbarkeit aufweist und dadurch eine Art Sollbruchstelle in der Trägerschicht darstellt. In vorteilhafter Weise kann der vorbestimmte Öffnungsdruck, d. h. der Druck, infolgedessen die Überdrucksicherung greifen soll, durch das Ausmaß der Schwächung des Schwächungsbereichs eingestellt werden. Bevorzugt ist dabei ein erfindungsgemäßes Verfahren, wobei die Trägerschicht im Schwächungsbereich eine mittlere Dicke im Bereich von 5 bis 150 µm, bevorzugt im Bereich von 10 bis 100 µm, besonders bevorzugt im Bereich von 15 bis 60 µm, aufweist, und/oder wobei die mittlere Dicke der Trägerschicht im Schwächungsbereich um 5 bis 95 %, bevorzugt um 10 bis 80 %, besonders bevorzugt um 20 bis 60 %, kleiner ist als die mittlere Dicke der Trägerschicht im Drucköffnungsbereich.

Der Fachmann versteht somit, dass das Klebeelement dazu eingerichtet ist, infolge des Einwirkens eines vorbestimmten Öffnungsdrucks auf den Drucköffnungsbereich ein Durchgangsloch auszubilden. In Übereinstimmung mit dem fachmännischen Verständnis bezeichnet dieses Einwirken eines vorbestimmten Öffnungsdrucks eine Druckdifferenz zwischen den zwei Seiten des Klebeelementes, wie sie beispielsweise auftritt, wenn das Klebeelement eine Ausnehmung in einem sonst geschlossenen Gefäß abdeckt und es im Inneren des Gefäßes zu einer Druckerhöhung kommt. Für den Fachmann ist klar, dass sich der vorbestimmte Öffnungsdruck nicht auf den Umgebungsdruck bezieht, welcher von allen Seiten und Bereichen des Klebeelements in gleicher Weise erfahren wird, sodass es nicht zu einer Krafteinwirkung kommt, welche auf den Drucköffnungsbereich relativ zum restlichen Klebeelement wirkt. Der vorbestimmte Öffnungsdruck bezeichnet somit in anderen Worten eine Öffnungsdruckdifferenz.

Der im Rahmen der vorliegenden Erfindung verwendete Ausdruck "zumindest teilweise irreversibel zerstört" bedeutet in Übereinstimmung mit dem fachmännischen Verständnis, dass keine vollständige Zerstörung des Schwächungsbereichs notwendig ist, sofern die Zerstörung ausreichend ist, um im Klebeelement ein Durchgangsloch auszubilden. Beispielsweise könnte ein kreisförmiger Schwächungsbereich, welcher einen Drucköffnungsbereich vollständig umgibt, infolge des vorbestimmten Öffnungsdruckes lediglich über einen Teil des Umfangs zerstört werden, sodass der Drucköffnungsbereich lediglich teilweise aus dem Klebeelement herausgelöst wird. Ebenso muss die Zerstörung nicht vollständig irreversibel sein. Durch die physikalisch-chemischen Eigenschaften typischer Klebemassen, insbesondere deren Fließverhalten, wäre zumindest theoretisch denkbar, dass sich eine wieder ins Klebeelement zugedrückter Drucköffnungsbereich trotz der irreversibel zerstörten Trägerschicht über die Wechselwirkung der Klebemasse zumindest provisorisch derart schließen lässt, dass der herausgehobene Drucköffnungsbereich durch die Klebeschicht in der Position gehalten wird.

Auch wenn es theoretisch denkbar ist, größere, flächigere Bereiche verringerter Dicke vorzusehen und solche komplexeren Schwächungsbereiche für spezifische Anwendungen sinnvoll sein können, ist es nach Einschätzung der Erfinderinnen mit Blick auf ein präzises Öffnen des Schwächungsbereichs bei gleichzeitig einfacher Herstellung bevorzugt, diesen im Wesentlichen als rillenförmige Ausnehmung, d.h. als längliche Vertiefung, in der Trägerschicht auszubilden. Bevorzugt ist entsprechend ein erfindungsgemäßes Verfahren, wobei der Schwächungsbereich als rillenförmige Ausnehmung in der Trägerschicht ausgebildet ist.

Der Fachmann versteht, dass der Widerstand, den das Klebeelement nach dem Lochverschluss einer anliegenden Druckdifferenz entgegensetzen kann, maßgeblich von der mechanischen Belastbarkeit der Trägerschicht bzw. der ersten Trägerlage beeinflusst wird, wohingegen der Beitrag der Klebeschicht geringer ist, insbesondere da diese in vielen Fällen in gewissem Umfang fließfähig sein wird. Entsprechend ist es, sofern der vorbestimmte Öffnungsdruck nicht bereits bei sehr kleinen Drücken greifen soll, zielführend, die Trägerschicht ohne vollständig durchgehende Perforationen auszubilden, um einen vorzeitigen Fluiddurchtritt bei niedrigen Drücken zu verhindern. Bevorzugt ist ein erfindungsgemäßes Verfahren, wobei der Schwächungsbereich keine Ausnehmung umfasst, die die Trägerschicht, insbesondere nicht die erste Trägerlage, vollständig durchdringt.

Bedingt durch die vorstehend beschriebene maßgebliche Beeinflussung des vorbestimmten Öffnungsdruckes durch die Trägerschicht und das zumeist ohnehin bestehende Fließverhalten der Klebemasse ist es vorteilhafterweise nicht notwendig, in der Klebeschicht eine entsprechende und zum Schwächungsbereich komplementäre Verringerung der mittleren Dicke vorzusehen, wodurch die Herstellung vereinfacht werden kann. Bevorzugt ist vor diesem Hintergrund ein erfindungsgemäßes Verfahren, wobei die mittlere Dicke der Klebeschicht im Schwächungsbereich um 20 % oder weniger, bevorzugt um 10 % oder weniger, besonders bevorzugt um 5 % oder weniger, ganz besonders bevorzugt um 1 % oder weniger, insbesondere bevorzugt um 0,1 % oder weniger, kleiner ist als die mittlere Dicke der Klebeschicht im Drucköffnungsbereich.

Der Fachmann versteht, dass die Abmessungen des Drucköffnungsbereiches vom Verlauf des Schwächungsbereiches abhängig sind. Der im Falle eines Überdruckes zumindest teilweise aus dem Klebeelement herausgelöste Drucköffnungsbereich wird somit in seiner Form und seinen Abmessungen durch die hierfür ursächliche Sollbruchstelle, d. h. den Schwächungsbereich definiert. Insoweit können nach Einschätzung der Erfinderinnen eine Vielzahl von Grundformen für den Drucköffnungsbereich vorgesehen werden, wobei es mit Blick auf die einfache Applikation und einen sicheren Halt des Klebeelements am Substrat in vielen Fällen zweckmäßig ist, die Form des Drucköffnungsbereichs an der Form der abzudeckenden Ausnehmung zu orientieren und den Drucköffnungsbereich relativ mittig im Klebeelement anzuordnen. Bevorzugt ist folglich ein erfindungsgemäßes Verfahren, wobei der Drucköffnungsbereich eine Grundform aufweist, die ausgewählt ist aus der Gruppe bestehend aus Kreisen, Teilkreisen, insbesondere Halbkreisen, Ovalen oder Vielecken, bevorzugt ausgewählt ist aus der Gruppe bestehend aus Kreisen, Halbkreisen und Ovalen. Bevorzugt ist zusätzlich oder alternativ ein erfindungsgemäßes Verfahren, wobei der Drucköffnungsbereich eine Grundform aufweist, die im Wesentlichen dem Querschnitt der durchgehenden Ausnehmung entspricht. Besonders bevorzugt ist in sämtlichen Ausgestaltungen ein erfindungsgemäßes Verfahren, wobei der Mittelpunkt des Klebeelements im Drucköffnungsbereich liegt.

Die Erfinderinnen haben erkannt, dass das erfindungsgemäße Verfahren und das dabei einzusetzende Klebeelement es in vorteilhafter Weise ermöglichen, mit vergleichsweise geringen Veränderungen im Herstellungsprozess des Klebeelements auch darauf Einfluss zu nehmen, wie weit das Klebeelement beim Eingreifen der Überdrucksicherung geöffnet wird und damit den Fluidstrom zu beeinflussen. Ein sich sehr weit öffnendes Durchgangsloch wird dabei insbesondere dann erhalten, wenn der Drucköffnungsbereich möglichst weitgehend vom Schwächungsbereich umgeben ist. Hierbei ist es in einer Ausgestaltung besonders interessant, den Drucköffnungsbereich im Wesentlichen vollständig mit dem Schwächungsbereich zu umgeben, sodass es besonders leicht möglich ist, einen aus dem Klebeelement infolge eines anliegenden Überdrucks herausgehobenen Drucköffnungsbereich vollständig vom Klebeelement zu entfernen. Bevorzugt ist entsprechend ein erfindungsgemäßes Verfahren, wobei der Drucköffnungsbereich bezogen auf den Umfang des Drucköffnungsbereichs zu 50 % oder mehr, bevorzugt zu 70 % oder mehr, besonders bevorzugt zu 90 % oder mehr, ganz besonders bevorzugt zu 95 % oder mehr, insbesondere bevorzugt zu im Wesentlichen 100 %, des Umfangs vom Schwächungsbereich umgeben ist.

Als alternative Ausgestaltung hierzu schlagen die Erfinderinnen vor, dass in einem Teilabschnitt des Umfangs des Drucköffnungsbereich bewusst kein Schwächungsbereich vorgesehen werden kann, sodass eine ungeschwächte Verwindung zwischen dem herausgehobenen Drucköffnungsbereich und dem restlichen Klebeelement verbleibt, durch die in vorteilhafter Weise verhindert werden kann, dass der herausgehobene Drucköffnungsbereich infolge von mechanischer Belastung zu leicht abgerissen werden kann und beispielsweise als Fremdkörper im Gehäuse verbleibt. Bevorzugt ist somit ein erfindungsgemäßes Verfahren, wobei der Drucköffnungsbereich bezogen auf den Umfang des Drucköffnungsbereichs zu 0,1 bis 10 %, bevorzugt zu 0,2 bis 5 %, besonders bevorzugt zu 0,5 bis 2 %, des Umfangs nicht vom Schwächungsbereich umgeben ist.

Der Schwächungsbereich im Klebeelement, d. h. die lokale Verringerung der mittleren Dicke in der Trägerschicht, kann nach Einschätzung der Erfinderinnen in vorteilhafter Weise mit einer breiten Palette von möglichen Verfahren erzeugt werden, wobei insbesondere das Stanzen sich zur Herstellung von Klebeelementen in großen Stückzahlen eignet, wohingegen sich der Einsatz von Laserstrukturierung insbesondere zur Einstellung besonders präziser Schwächungsbereiche eignet. Bevorzugt ist insoweit ein erfindungsgemäßes Verfahren, wobei der Schwächungsbereich im Klebeelement hergestellt wird mittels materialabtragender oder schneidender Bearbeitungsverfahren, bevorzugt mittels Laserstrukturierung oder Stanzen.

Im Zuge der Entwicklung der vorliegenden Erfindung haben die Erfinderinnen mit verschiedenen Richtungen experimentiert, aus denen die Materialbearbeitung der Klebeelemente erfolgen kann. Zunächst wurde dabei versucht, die Materialbearbeitung aus der Richtung der Trägerschicht, d. h. von der der Klebeschicht abgewandten Seite, zu bedingen. Dies resultierte zwar in zufriedenstellenden Schwächungsbereichen, wurde jedoch, insbesondere bei mechanischen Bearbeitungsverfahren teilweise dadurch erschwert, dass die Krafteinwirkung auf die Trägerschicht auch die unterliegende Klebeschicht beeinflusst und diese beispielsweise an die Unterlage andrücken kann, was zu einer ungewollten Adhäsion und/oder einer Verformung der Klebeschicht führen kann. Die Erfinderinnen haben erkannt, dass überraschenderweise eine leichtere Erzeugung des Schwächungsbereichs dann möglich ist, wenn die Bearbeitung der Trägerschicht von der Seite erfolgt, die mit der Klebeschicht belegt ist, d. h. wenn die Bearbeitung quasi durch die Klebeschicht hindurch erfolgt. Dies ist überraschenderweise möglich, da die Klebeschicht durch die Klebemasse in gewisser Weise fließfähig ist und eine im Zuge der Bearbeitung der Trägerschicht erzeugte lokale Materialverdrängung mit der Zeit relativ einfach ausgeglichen werden kann. Für manche Anwendungen bevorzugt ist ein erfindungsgemäßes Verfahren, wobei der Schwächungsbereich im Klebeelement hergestellt wird durch Bearbeitung der von der Klebeschicht abgewandten Seite der Trägerschicht. Besonders bevorzugt ist alternativ jedoch ein erfindungsgemäßes Verfahren, wobei der Schwächungsbereich im Klebeelement hergestellt wird durch Bearbeitung der mit der Klebeschicht belegten Seite der Trägerschicht, wobei das Bearbeiten bevorzugt durch die Klebeschicht hindurch erfolgt.

Der Fachmann versteht, dass der vorbestimmte Öffnungsdruck maßgeblich durch die Konzeption des eingesetzten Klebeelements und insbesondere durch die Abmessungen und Ausgestaltungen des Schwächungsbereichs beeinflusst wird, sodass die strukturelle Ausgestaltung der Klebeelemente es ermöglicht, präzise das gewünschte Öffnungsverhalten einzustellen. Nach Einschätzung der Erfinderinnen wird in den Fällen, bei denen die vorbestimmten Öffnungsdrücke sehr niedrig sind, in vielen Fällen eine inhärent verringerte strukturelle Integrität der gesamten Klebeelemente erhalten, wobei sich fertigungsbedingte Abweichungen im Schwächungsbereich und die daraus resultierenden absoluten Schwankungen im vorbestimmten Öffnungsdruck als relativ große relative Unsicherheiten ausprägen können. Entsprechend schlagen die Erfinderinnen vor, den vorbestimmten Öffnungsdruck nicht zu niedrig zu wählen. Gleichzeitig stellen besonders hohe vorbestimmte Öffnungsdrücke zumindest mittelbar höhere Anforderungen an die einzusetzenden Klebemassen bzw. deren Klebkraft am Substrat, da verhindert werden soll, dass es vor dem Öffnen des Drucköffnungsbereichs zu einem adhäsiven Versagen des gesamten Klebeelements und damit zu einem vorzeitigen Entlüften kommt. Entsprechend schlagen die Erfinderinnen neben zielführenden Untergrenzen für den Öffnungsdruck zudem auch Bereiche und damit verbundene Obergrenzen vor, die nach Einschätzung der Erfinderinnen für zahlreiche Anwendungen zweckmäßig sind und sich mit typischen Klebemassen und Trägermaterialien gut einstellen lassen. Bevorzugt ist ein erfindungsgemäßes Verfahren, wobei der vorbestimmte Öffnungsdruck 10 kPa oder mehr, bevorzugt 15 kPa oder mehr, besonders bevorzugt 20 kPa oder mehr, ganz besonders bevorzugt 25 kPa oder mehr, beträgt, und/oder wobei der vorbestimmte Öffnungsdruck im Bereich von 5 bis 200 kPa, bevorzugt im Bereich von 10 bis 150 kPa, besonders bevorzugt im Bereich von 15 bis 100 kPa, ganz besonders bevorzugt im Bereich von 2 bis 50 kPa, liegt.

Es kann als Vorteil des erfindungsgemäßen Verfahrens gesehen werden, dass das notwendige Aufkleben der Klebeelemente, insbesondere im Vergleich mit aus dem Stand der Technik bekannten Berstsystemen, besonders einfach ist und entsprechend auch leicht automatisiert erfolgen kann. Bevorzugt ist entsprechend auch ein erfindungsgemäßes Verfahren, wobei das Aufkleben des Klebeelements automatisiert erfolgt, bevorzugt mit einem Roboterarm.

Für eine optimale Öffnungswirkung im Falle eines anliegenden Überdrucks schlagen die Erfinderinnen vor, den Drucköffnungsbereich im Wesentlichen konzentrisch über der durchgehenden Ausnehmung anzuordnen. Bevorzugt ist ein erfindungsgemäßes Verfahren, wobei der Drucköffnungsbereich konzentrisch über der durchgehenden Ausnehmung angeordnet wird.

Eine besonders einfache Ausgestaltung, welche insbesondere eine große Flexibilität hinsichtlich der damit zu verschließenden Lochgeometrie aufweist, wird dann erhalten, wenn der Drucköffnungsbereich kleiner ist als die zu verschließende durchgehende Ausnehmung, sodass die durchgehende Ausnehmung in der Draufsicht vollständig oberhalb des Drucköffnungsbereichs liegt. Bevorzugt ist in diesen Fällen ein erfindungsgemäßes Verfahren, wobei der Drucköffnungsbereich eine kleinere Fläche aufweist als der Querschnitt der durchgehenden Ausnehmung, wobei das Aufkleben des Klebeelements bevorzugt so erfolgt, dass der Drucköffnungsbereich vollständig oberhalb der durchgehenden Ausnehmung angeordnet ist.

Bei der vorstehend beschriebenen Ausgestaltung, bei der Drucköffnungsbereich vollständig vom Rand der durchgehenden Ausnehmung umgeben ist, hat sich in eigenen Experimenten der Erfinderinnen jedoch als nachteilig erwiesen, dass die Einstellung eines anisotopen Öffnungsverhaltens erschwert wird. Mit anderen Worten ist eine entsprechende Ausgestaltung anfälliger dafür, infolge eines von Seiten der Trägerschicht wirkenden Überdruckes, d. h. in den meisten Anwendungen eines von außen auf das Substrat wirkenden Überdrucks, zu öffnen, beispielsweise in das Innere eines verschlossenen Gehäuses hinein. Auch wenn dies für bestimmte Ausgestaltungen wünschenswert sein kann, wird ein entsprechendes Öffnungsverhalten für die meisten Anwendungen, insbesondere im Bereich der Batteriegehäuse, als nachteilig empfunden. Im Zuge der Entwicklung haben die Erfinderinnen erkannt, dass zur Einstellung der Richtungsabhängigkeit des Öffnungsverhaltens das Aufkleben des Klebeelements so erfolgen sollte, dass der Drucköffnungsbereich zumindest abschnittsweise über den Rand der durchgehenden Ausnehmung hinausragt. Hierdurch wird in vorteilhafter Weise erreicht, dass der Überlapp zwischen dem Rand der durchgehenden Ausnehmung und dem Drucköffnungsbereich zusammen mit der Steifigkeit der Trägerschicht, der ungewollten Öffnung des Drucköffnungsbereichs in Richtung der verschlossenen Ausnehmung entgegenwirkt. Besonders bevorzugt ist deshalb ein erfindungsgemäßes Verfahren, wobei das Aufkleben des Klebeelements so erfolgt, dass der Drucköffnungsbereich bezogen auf den Umfang der durchgehenden Ausnehmung zumindest abschnittsweise, bevorzugt zu 50 % oder mehr, besonders bevorzugt zu 70 % oder mehr, ganz besonders bevorzugt zu 90 % oder mehr, überaus bevorzugt zu 95 % oder mehr, insbesondere bevorzugt zu im Wesentlichen 100 %, des Umfangs über den Rand der durchgehenden Ausnehmung hinausragt, und/oder wobei der Drucköffnungsbereich eine größere Fläche aufweist als der Querschnitt der durchgehenden Ausnehmung.

Ausgehend von dieser Erkenntnis haben die Erfinderinnen erkannt, dass durch den Überlappungsgrad in vorteilhafter Weise auch der Belastungsdruck eingestellt werden kann, bis zu dem der Drucköffnungsbereich bei einem von außen, d. h. aus der Richtung der Trägerschicht, wirkenden Druck, nicht aus dem Klebeelement herausgelöst wird, sodass nicht nur eine vorteilhafte Anisotropie des Öffnungsverhaltens erreicht werden kann, sondern diese auch noch in beide Richtungen präzise eingestellt werden kann. Besonders bevorzugt ist entsprechend auch ein erfindungsgemäßes Verfahren, wobei das Aufkleben des Klebeelements durch das zumindest abschnittsweise Überstehen des Drucköffnungsbereichs über den Rand der durchgehenden Ausnehmung so erfolgt, dass das aufgeklebte Klebeelement einem Einwirken eines vorbestimmten Belastungsdrucks auf die Trägerschicht im Drucköffnungsbereich widersteht, so dass das Klebeelement im Schwächungsbereich nicht irreversibel zerstört und im Klebeelement kein Durchgangsloch ausgebildet wird. Ganz besonders bevorzugt ist dabei ein erfindungsgemäßes Verfahren, wobei der vorbestimmte Belastungsdruck 100 kPa oder mehr, bevorzugt 200 kPa oder mehr, besonders bevorzugt 300 kPa oder mehr, ganz besonders bevorzugt 400 kPa oder mehr, beträgt.

In der vorstehend beschriebenen vorteilhaften Ausgestaltung mit einem zumindest teilweise Überlappen des Drucköffnungsbereichs mit dem Rand der Ausnehmung haben die Erfinderinnen einen Effekt beobachtet, der die möglichst freie Einstellung des vorbestimmten Öffnungsdruckes bei gleichzeitiger Einstellung eines vorbestimmten Belastungsdrucks limitieren kann. Insbesondere bei hohen Überlappungsgraden, welche zum Einstellen von hohen Belastungsdrücken notwendig sein können, kann es - zumindest bei der bevorzugten recht weitgehenden Belegung der Trägerschicht mit einer Klebeschicht - dazu kommen, dass die adhäsive Wechselwirkung der Klebeschicht im Überlappungsbereich einen spürbaren Beitrag zum notwendigen Öffnungsdruck leistet, da in diesem Fall zum Anheben des Drucköffnungsbereiches auch die Adhäsion zwischen der Klebeschicht und dem Rand der Ausnehmung überwunden werden muss. In diesem Fall wird der vorbestimmte Öffnungsdruck somit nicht mehr im Wesentlichen durch die Schwächung der Trägerschicht bestimmt, sondern der zum Öffnen notwendige Druck muss auch die adhäsive Wechselwirkung zwischen der Klebeschicht und dem Substrat überwinden. Um trotz großer vorbestimmter Belastungsdrücke, d.h. bspw. einer hohen Resistenz gegen externe Belastungsfaktoren, auch kleine vorbestimmte Öffnungsdrücke realisieren zu können, schlagen die Erfinderinnen als Lösung vor, ein zusätzliches Abdeckelement vorzusehen, welches auf die Klebeschicht aufgebracht werden kann und in seinen Abmessungen zweckmäßigerweise möglichst weitgehend den Abmessungen des Drucköffnungsbereichs entspricht. In diesem Fall verringert oder unterbindet das Abdeckelement eine adhäsive Wechselwirkung zwischen der Klebeschicht im Bereich des Drucköffnungsbereichs und dem Substrat, sodass das Klebeelement beispielsweise ausschließlich über die adhäsive Wechselwirkung der Klebeschicht außerhalb des Drucköffnungsbereichs am Substrat fixiert ist. Bei Einwirken eines von außen, d. h. von der der Klebeschicht abgewandten Seite, auftretenden Druckes setzt das Klebeelement infolge der Überlappung einem ungewünschten Öffnen einen Widerstand entgegen, welcher durch die zusätzliche strukturelle Integrität des Abdeckelements in vorteilhafter Weise noch weiter erhöht werden kann, da auch dieses zum Aufbrechen erst deformiert werden müsste. Aus der anderen Richtung betrachtet verhindert das Abdeckelement jedoch eine adhäsive Wechselwirkung zwischen dem relevanten Teil der Klebeschicht und dem Rand des Substrats in dem beim Überdrucköffnen herauszuhebenden Bereich und erlaubt somit wiederum die Einstellung von auch geringen vorbestimmten Öffnungsdrücken. Besonders bevorzugt ist folglich ein erfindungsgemäßes Verfahren, wobei das Klebeelement zusätzlich ein Abdeckelement umfasst, welches auf der von der Trägerschicht abgewandten Seite der Klebeschicht im Drucköffnungsbereich angebracht ist, wobei das Abdeckelement bevorzugt im Wesentlichen nicht über den Drucköffnungsbereich hinausragt und/oder wobei die Abmessungen des Abdeckelements bevorzugt im Wesentlichen den Abmessungen des Drucköffnungsbereichs entsprechen, oder wobei die durchgehende Ausnehmung vor dem Aufkleben des Klebeelements zumindest teilweise, bevorzugt vollständig, mit einem Abdeckelement bedeckt wird, wobei die Abmessungen des Abdeckelements bevorzugt im Wesentlichen den Abmessungen des Drucköffnungsbereichs entsprechen, wobei das Aufkleben des Klebeelements so erfolgt, dass der Drucköffnungsbereich das Abdeckelement zumindest teilweise, bevorzugt vollständig, bedeckt. Der Fachmann versteht, dass ein erfindungsgemäßes Verfahren zweckmäßig ist, wobei das Abdeckelement keine Klebemasse umfasst. Bevorzugt ist vielmehr ein erfindungsgemäßes Verfahren, wobei das Abdeckelement eine Folie umfasst, die ausgewählt ist aus der Gruppe bestehend aus Kunststofffolien und Metallfolien.

Den Erfinderinnen ist es insoweit gelungen, für die Klebeschicht, die Trägerschicht und das Abdeckelement zweckmäßige Abmessungen anzugeben. Bevorzugt ist nämlich ein erfindungsgemäßes Verfahren, wobei die Klebeschicht eine mittlere Dicke im Bereich von 5 bis 1500 µm, bevorzugt im Bereich von 10 bis 500 µm, besonders bevorzugt im Bereich von 35 bis 100 µm, aufweist, und/oder wobei die Trägerschicht eine mittlere Dicke im Bereich von 30 bis 2000 µm, bevorzugt im Bereich von 40 bis 1000 µm, besonders bevorzugt im Bereich von 50 bis 500 µm, aufweist, und/oder wobei das Abdeckelement eine mittlere Dicke im Bereich von 5 bis 340 µm, bevorzugt im Bereich von 10 bis 200 µm, besonders bevorzugt im Bereich von 12 bis 100 µm, aufweist.

Der Fachmann versteht, dass die Erfindung auch ein Klebeelement betrifft, welches in dem erfindungsgemäßen Verfahren eingesetzt werden kann und mit dem sich die vorstehend beschriebenen Vorteile erhalten lassen. Die Erfindung betrifft somit ebenfalls ein Klebelement zum dauerhaften Verschließen von Löchern mit Überdrucksicherung, bevorzugt in einem erfindungsgemäßen Verfahren, umfassend:
i) eine Klebeschicht umfassend eine Klebemasse, und
ii) eine auf der Klebeschicht angeordnete Trägerschicht, umfassend eine erste Trägerlage,
wobei das Klebeelement einen Drucköffnungsbereich umfasst, der zumindest abschnittsweise von einem in der Trägerschicht ausgebildeten Schwächungsbereich umgeben ist, wobei die mittlere Dicke der Trägerschicht im Schwächungsbereich kleiner ist als die mittlere Dicke der Trägerschicht im Drucköffnungsbereich, wobei das Klebeelement dazu eingerichtet ist, dass das Einwirken eines vorbestimmten Öffnungsdrucks auf den Drucköffnungsbereich das Klebeelement im Schwächungsbereich zumindest teilweise irreversibel zerstört und im Klebeelement ein Durchgangsloch ausbilden.

Nach Einschätzung der Erfinderinnen sind nicht nur das erfindungsgemäße Verfahren und das dabei eingesetzte erfindungsgemäße Klebeelement vorteilhaft, sondern die Vorteile übertragen sich auch direkt auf die entsprechend hergestellten Substrate, welche über eine vorteilhafte Überdrucksicherung verfügen, wobei insbesondere das niedrige Eigengewicht und das geringe Eigenvolumen der erfindungsgemäßen Klebeelemente sowie die zuverlässige Öffnung bei vorbestimmten Öffnungsdrücken in überdruckgesicherten Substraten resultieren, die für viele Anwendungen, insbesondere im Bereich der Elektromobilität, beispielsweise in der Form von Batteriegehäusen, besonders geeignet sind. Die Erfindung betrifft entsprechend auch ein überdruckgesichertes Substrat, bevorzugt herstellbar mit dem erfindungsgemäßen Verfahren, umfassend einen fluiddicht verschlossenen Innenraum mit zumindest einer fluiddicht verschlossenen Öffnung, wobei die verschlossene Öffnung mit einem erfindungsgemäßen Klebeelement fluiddicht verschlossen ist, wobei der Drucköffnungsbereich des Klebeelements die verschlossene Öffnung zumindest teilweise bedeckt, wobei das überdruckgesicherte Substrat dazu eingerichtet ist, dass das Klebeelement in Folge eines vorbestimmten Überdrucks im Innenraum im Schwächungsbereich zumindest teilweise irreversibel zerstört wird, so dass ein Druckabbau im Innenraum durch das im Klebeelement ausgebildete Durchgangsloch erfolgen kann.

Abschließend betrifft die Erfindung auch die Verwendung eines erfindungsgemäßen Klebelements zum dauerhaften Verschließen eines Loches in einem Substrat und zum Erzeugen einer Überdrucksicherung, wobei das Loch so mit dem Klebeelement verschlossen wird, dass der Drucköffnungsbereich das Loch im Substrat zumindest teilweise bedeckt.

Nachfolgend werden bevorzugte Ausführungsformen der Erfindung unter Bezugnahme auf die beiliegenden Figuren näher erläutert und beschrieben. Dabei zeigen:
- Fig. 1: eine erste schematische Explosionsdarstellung des Aufbaus eines erfindungsgemäßen Klebeelements vor dem Aufbringen auf das Substrat in einer bevorzugten Ausführungsform;
- Fig. 2: eine zweite schematische Explosionsdarstellung des Aufbaus eines erfindungsgemäßen Klebeelements vor dem Aufbringen auf das Substrat in einer bevorzugten Ausführungsform;
- Fig. 3: eine schematische Querschnittsdarstellung durch ein erfindungsgemäßes Klebeelement in einer bevorzugten Ausführungsform;
- Fig. 4: eine schematische Darstellung eines erfindungsgemäßen überdruckgesicherten Substrates mit geschlossener Überdrucksicherung; und
- Fig. 5: eine schematische Darstellung eines erfindungsgemäßen überdruckgesicherten Substrates mit geöffneter Überdrucksicherung.

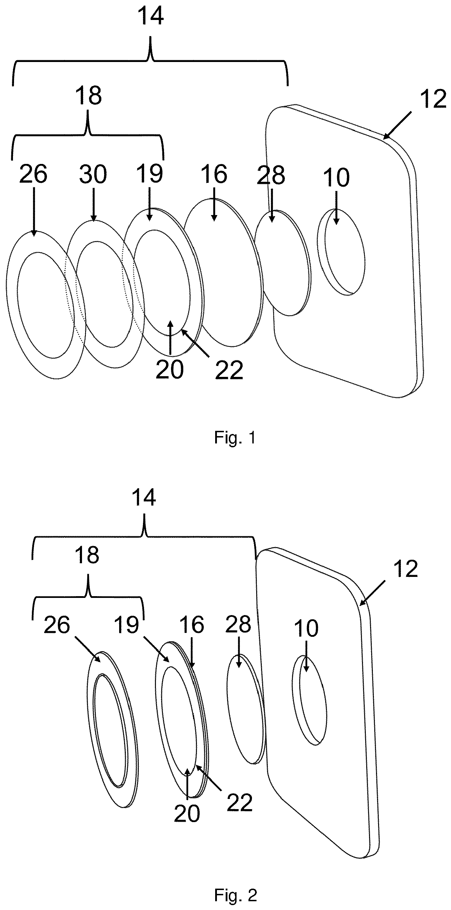

Fig. 1 zeigt eine erste schematische Explosionsdarstellung des Aufbaus eines erfindungsgemäßen Klebeelements 14 vor dem Aufbringen auf das Substrat 12, wie es in einem erfindungsgemäßen Verfahren erfolgt.

Das erfindungsgemäße Klebeelement 14 umfasst eine Klebeschicht 16, über die das Klebeelement so am Substrat 12 angebracht werden kann, dass die durchgehende Ausnehmung 10 im Substrat 12 fluiddicht, insbesondere gasdicht, verschlossen wird. In dem gezeigten Beispiel der Fig. 1 handelt es sich bei dem Substrat 12 um ein metallisches Batteriegehäuse, wobei lediglich eine Wand des Batteriegehäuses gezeigt ist, die dessen Innenraum begrenzt.

Die Klebeschicht 16 umfasst im gezeigten Beispiel eine Haftklebemasse auf der Basis von Poly(meth)acrylaten, die beispielsweise durch den Einsatz von expandierten Mikroballons auch syntaktisch geschäumt werden kann.

Die Klebeschicht 16 ist auf der ersten Trägerlage 19 einer mehrlagigen Trägerschicht 18 angeordnet und mit dieser über die Adhäsion der Klebemasse verbunden. Im gezeigten Beispiel der Fig. 1 ist aus der Explosionsdarstellung zu erkennen, dass die erste Trägerlage 19 einseitig im Wesentlichen vollständig von der Klebeschicht 16 bedeckt wird, was aus der Darstellung der Fig. 2 deutlicher wird, in der die Explosionsdarstellung der Fig. 1 teilweise zusammengeführt wird, so dass die Verbindung der ersten Trägerlage 19 und der Klebeschicht 16 deutlich wird.

In den Fig. 1 und 2 ist die erste Trägerlage 19 eine Metallfolie mit einer mittleren Dicke von etwa 80 µm. Über die erste Trägerlage 19 hinaus umfasst die Trägerschicht 18 eine Schutzfolie 26 aus Polyethylenterephthalat als weitere Lage, welche über eine ebenfalls flächig aufgebrachte Zwischenklebeschicht 30 mit der ersten Trägerlage 19 verbunden wird.

In den Fig. 1 und 2 ist jeweils deutlich zu erkennen, dass das Klebeelement 14 in der Trägerschicht 18 einen Drucköffnungsbereich 20 umfasst, der durch einen Schwächungsbereich 22 ausgebildet wird. Der Drucköffnungsbereich 20 liegt dabei mittig im Klebeelement 14 und ist im gezeigten Beispiel im Wesentlichen kreisförmig ausgeführt, so dass er damit hinsichtlich der Grundform im Wesentlichen der durchgehenden Ausnehmung 10 im Substrat 12 entspricht, die im erfindungsgemäßen Verfahren verschlossen werden soll.

Durch diesen Aufbau ist das erfindungsgemäße Klebeelement 14 dazu eingerichtet, dass das Einwirken eines vorbestimmten Öffnungsdrucks auf den Drucköffnungsbereich 20, beispielsweise in Folge eines im Inneren des Substrates 12 herrschenden Überdruckes, im Schwächungsbereich 22 eine zumindest teilweise irreversibel Zerstörung bewirken kann, durch die im Klebeelement 14 ein Durchgangsloch 24 ausgebildet wird.

Der Schwächungsbereich 22 ist im gezeigten Beispiel als rillenförmige Ausnehmung in der Trägerschicht 18 ausgebildet, die sich durch die Schutzfolie 26 hindurch in die erste Trägerlage 19 hinein erstreckt und den Drucköffnungsbereich 20 im Wesentlichen vollständig umgibt, wobei die mittlere Dicke der Trägerschicht 18 im Bereich des Schwächungsbereichs 22 gegenüber der ursprünglichen Dicke der Trägerschicht 18 und damit auch gegenüber deren mittlerer Dicke im Drucköffnungsbereich 20, je nach gewünschtem Öffnungsdruck, um etwa 20 bis 60 % reduziert ist.

In Fig. 1 ist zu erkennen, dass die Klebeschicht 16 im gezeigten Beispiel eine im Wesentlichen konstante mittlere Dicke aufweist, was durch eine in diesem Fall aus Richtung der Trägerschicht 18 erfolgte mechanischen Ausbildung des Schwächungsbereichs 22 durch Stanzen bedingt ist, durch die die Klebeschicht 16 nicht beeinflusst wird.

In den Beispielen der Fig. 1 und 2 erfolgt das Aufkleben des erfindungsgemäßen Klebeelements 14 im erfindungsgemäßen Verfahren beispielsweise automatisiert mit einem Roboterarm, wobei der Drucköffnungsbereich 20 und die durchgehenden Ausnehmung 10 im gezeigten Beispiel konzentrisch angeordnet werden. Um eine vorteilhafte Anisotropie des Öffnungsverhaltens zu erreichen, erfolgt das Aufkleben dabei so, dass der Drucköffnungsbereich 20 über den gesamten Umfang der durchgehenden Ausnehmung 10 über den Rand der durchgehenden Ausnehmung 10 hinausragt, so dass der Überlapp einem von außen einwirkenden Belastungsdruck einen Widerstand entgegensetzen kann.

Um trotz des Überlappens des erfindungsgemäßen Klebeelements 14 mit dem Rand der durchgehenden Ausnehmung 10 eine präzise Einstellung des gewünschten Öffnungsdruckes zu ermöglichen, umfasst das erfindungsgemäße Klebeelement 14 ein aus Kunststofffolie ausgebildetes Abdeckelement 28, dessen Abmessungen im Wesentlichen denen des Drucköffnungsbereichs 20 entsprechen und das die Klebeschicht 16 im Drucköffnungsbereich 20 im Wesentlichen vollständig bedeckt.

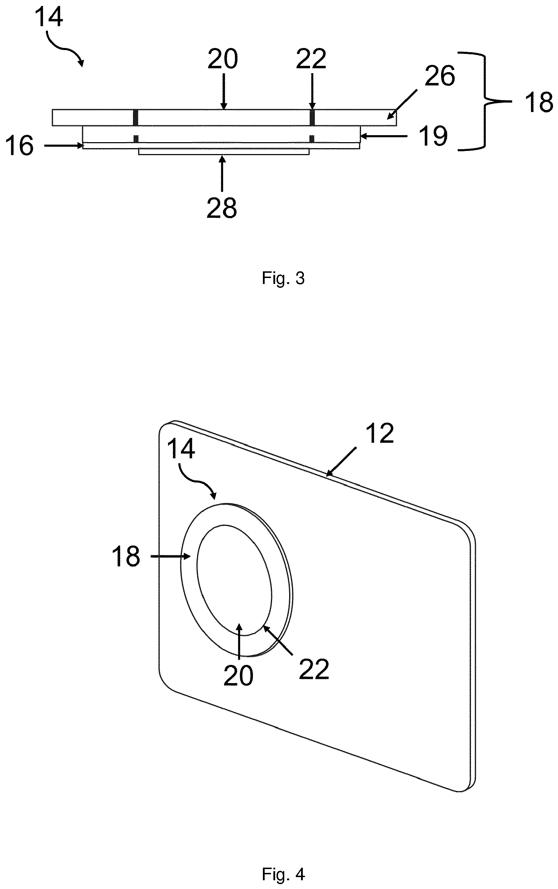

Fig 3 visualisiert den Aufbau eines erfindungsgemäßen Klebeelements 14 in einer Querschnittsdarstellung, wobei das schematisch dargestellte Klebeelement 14 hinsichtlich des Aufbaus in vielen Aspekten dem Klebeelement 14 der Fig. 1 und 2 entspricht. In Fig. 3 ist jedoch angedeutet, dass die Bearbeitung der Trägerschicht 18 zur Erzeugung des Schwächungsbereichs 22 zumindest teilweise auch durch die Klebeschicht 16 hindurch erfolgen kann, wobei vorteilhafter Weise durch das Fließverhalten der Klebeschicht 16 in dieser schon nach kurzer Zeit keine Bearbeitungsspuren, beispielsweise in der Form einer verringerten Dicke, verbleiben.

Fig. 4 zeigt nunmehr ein erfindungsgemäßes überdruckgesichertes Substrat 12, dessen durchgehende Ausnehmung 10 durch das Klebeelement 14 fluiddicht verschlossen ist, wie es beispielsweise ausgehend von den Fig. 1 und 2 erhalten werden kann. Durch den zuvor beschriebenen Aufbau des Klebeelements 14 und dessen Anordnung über der durchgehenden Ausnehmung 10 kann das überdruckgesicherte Substrat 12 so ausgelegt werden, dass es einen aus Richtung der Trägerschicht 18 einwirkenden Belastungsdruck von 400 kPa oder mehr übersteht, ohne dass es zu einer Zerstörung des Klebeelements 14 im Schwächungsbereich 22 käme. Tatsächlich konnte ein entsprechender Aufbau in den Experimenten der Erfinderinnen sogar die Bestrahlung des überdruckgesicherten Substrats 12, mit einem Hochdruckwasserstrahlreiniger (IPX9K, ISO 20653:2013) überstehen, ohne dass es zu einem Versagen des Verschlusses kam.

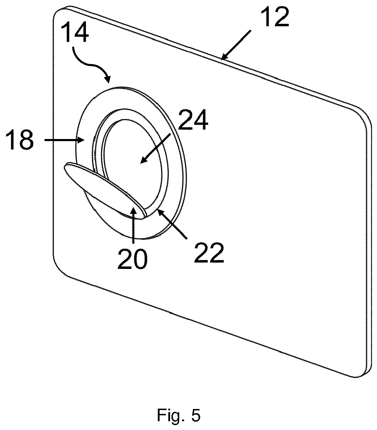

Gleichzeitig ist es möglich, gezielt einen vorbestimmten Öffnungsdruck einzustellen, beispielsweise im Bereich von 5 bis 200 kPa, bei dessen Einwirken in die gewünschte Öffnungsrichtung, d.h. bspw. vom Inneren des Batteriegehäuses nach außen, der Drucköffnungsbereich 20 in Folge einer zumindest teilweisen Zerstörung des Schwächungsbereichs 22 aus dem Klebeelement 14 herausgehoben wird und dadurch ein Durchgangsloch 24 ausbildet, durch dass der Überdruck abgebaut werden kann. Der aus dem Eingreifen der Überdrucksicherung resultierende Endzustand ist in Fig. 5 schematisch visualisiert, wobei in vorteilhaften Ausgestaltungen das vollständige Ablösen des Drucköffnungsbereichs 20 vom Klebelement 14 zusätzlich dadurch vermieden wird, dass der Schwächungsbereich 22 nicht über den gesamten Umfang geführt wird, so dass eine ungeschwächte Verbindung zwischen dem Drucköffnungsbereich 20 und dem rechtlichen Klebelement 14 verbleibt.

### Bezugszeichenliste

- 10: Durchgehende Ausnehmung
- 12: Substrat
- 14: Klebeelement
- 16: Klebeschicht
- 18: Trägerschicht
- 19: Erste Trägerlage
- 20: Drucköffnungsbereich
- 22: Schwächungsbereich
- 24: Durchgangsloch
- 26: Schutzfolie
- 28: Abdeckelement
- 30: Zwischenklebeschicht

## Patentansprüche

1. Verfahren zum Verschließen einer durchgehenden Ausnehmung (10) in einem Substrat (12), umfassend die Verfahrensschritte:
a) Herstellen oder Bereitstellen eines Klebeelements (14), umfassend:
i) eine Klebeschicht (16) umfassend eine Klebemasse,
ii) eine auf der Klebeschicht (16) angeordnete Trägerschicht (18), umfassend eine erste Trägerlage (19), und
b) Aufkleben des Klebeelements (14) mittels der Klebeschicht (16) auf das Substrat (12), so dass das Klebeelement (14) die durchgehende Ausnehmung (10) vollständig bedeckt und die durchgehende Ausnehmung (10) durch das Klebeelement (14) fluiddicht verschlossen wird,
wobei das Klebeelement (14) einen Drucköffnungsbereich (20) umfasst, der zumindest abschnittsweise von einem in der Trägerschicht (18) ausgebildeten Schwächungsbereich (22) umgeben ist, wobei die mittlere Dicke der Trägerschicht (18) im Schwächungsbereich (22) kleiner ist als die mittlere Dicke der Trägerschicht (18) im Drucköffnungsbereich (20),
wobei das Klebeelement (14) dazu eingerichtet ist, dass das Einwirken eines vorbestimmten Öffnungsdrucks auf den Drucköffnungsbereich (20) das Klebeelement (14) im Schwächungsbereich (22) zumindest teilweise irreversibel zerstört und im Klebeelement (14) ein Durchgangsloch (24) ausbilden, und
wobei das Aufkleben des Klebeelements (14) so erfolgt, dass der Drucköffnungsbereich (20) die durchgehende Ausnehmung (10) im Substrat (12) zumindest teilweise bedeckt.

2. Verfahren nach Anspruch 1, wobei der Schwächungsbereich (22) als rillenförmige Ausnehmung in der Trägerschicht (18) ausgebildet ist.

3. Verfahren nach einem der Ansprüche 1 oder 2, wobei der vorbestimmte Öffnungsdruck 10 kPa oder mehr beträgt.

4. Verfahren nach einem der Ansprüche 1 bis 3, wobei die Trägerschicht (18) als weitere Trägerlage auf der von der Klebeschicht (16) abgewandten Seite der ersten Trägerlage (19) eine Schutzfolie (26) umfasst.

5. Verfahren nach einem der Ansprüche 1 bis 4, wobei das Klebeelement (14) zusätzlich ein Abdeckelement (28) umfasst, welches auf der von der Trägerschicht (18) abgewandten Seite der Klebeschicht (16) im Drucköffnungsbereich (20) angebracht ist.

6. Verfahren nach einem der Ansprüche 1 bis 5, wobei das Aufkleben des Klebeelements (14) durch das zumindest abschnittsweise Überstehen des Drucköffnungsbereichs (20) über den Rand der durchgehenden Ausnehmung (10) so erfolgt, dass das aufgeklebte Klebeelement (14) einem Einwirken eines vorbestimmten Belastungsdrucks auf die Trägerschicht (18) im Drucköffnungsbereich (20) widersteht, so dass das Klebeelement (14) im Schwächungsbereich (22) nicht irreversibel zerstört und im Klebeelement (14) kein Durchgangsloch (24) ausgebildet wird.

7. Verfahren nach Anspruch 6, wobei der vorbestimmte Belastungsdruck 100 kPa oder mehr beträgt.

8. Klebelement (14) zum dauerhaften Verschließen von durchgehenden Ausnehmungen mit Überdrucksicherung umfassend:
i) eine Klebeschicht (16) umfassend eine Klebemasse, und
ii) eine auf der Klebeschicht (16) angeordnete Trägerschicht (18), umfassend eine erste Trägerlage (19),
wobei das Klebeelement (14) einen Drucköffnungsbereich (20) umfasst, der zumindest abschnittsweise von einem in der Trägerschicht (18) ausgebildeten Schwächungsbereich (22) umgeben ist, wobei die mittlere Dicke der Trägerschicht (18) im Schwächungsbereich (22) kleiner ist als die mittlere Dicke der Trägerschicht (18) im Drucköffnungsbereich (20),
wobei das Klebeelement (14) dazu eingerichtet ist, dass das Einwirken eines vorbestimmten Öffnungsdrucks auf den Drucköffnungsbereich (20) das Klebeelement (14) im Schwächungsbereich (22) zumindest teilweise irreversibel zerstört und im Klebeelement (14) ein Durchgangsloch (24) ausbilden.

9. Überdruckgesichertes Substrat (12), umfassend einen fluiddicht verschlossenen Innenraum mit zumindest einer fluiddicht verschlossenen Öffnung, wobei die verschlossene Öffnung mit einem Klebeelement (14) nach Anspruch 8 fluiddicht verschlossen ist, wobei der Drucköffnungsbereich (20) des Klebeelements (14) die verschlossene Öffnung zumindest teilweise bedeckt,
wobei das überdruckgesicherte Substrat (12) dazu eingerichtet ist, dass das Klebeelement (14) in Folge eines vorbestimmten Überdrucks im Innenraum im Schwächungsbereich (22) zumindest teilweise irreversibel zerstört wird, so dass ein Druckabbau im Innenraum durch das im Klebeelement (14) ausgebildete Durchgangsloch (24) erfolgen kann.

10. Verwendung eines Klebelements nach Anspruch 8 zum dauerhaften Verschließen einer durchgehenden Ausnehmung in einem Substrat (12) und zum Erzeugen einer Überdrucksicherung, wobei die durchgehende Ausnehmung so mit dem Klebeelement (14) verschlossen wird, dass der Drucköffnungsbereich (20) die durchgehende Ausnehmung im Substrat (12) zumindest teilweise bedeckt.
